(19) Europäisches Patentamt / European Patent Office / Office européen des brevets

(11) **EP 2 318 249 B1**

(12) **FASCICULE DE BREVET EUROPEEN**

(45) Date de publication et mention de la délivrance du brevet:
**26.12.2012 Bulletin 2012/52**

(21) Numéro de dépôt: **09740380.2**

(22) Date de dépôt: **24.07.2009**

(51) Int Cl.:
**B60W 10/06** *(2006.01)*          **B60W 10/08** *(2006.01)*
**B60W 20/00** *(2006.01)*

(86) Numéro de dépôt international:
**PCT/FR2009/051494**

(87) Numéro de publication internationale:
**WO 2010/020727 (25.02.2010 Gazette 2010/08)**

(54) **SYSTEME DE COMMANDE D'UN GROUPE MOTOPROPULSEUR HYBRIDE POUR VEHICULE AUTOMOBILE, ET PROCEDE ASSOCIE**

VERFAHREN ZUR STEUERUNG EINER HYBRIDANTRIEBSEINHEIT FÜR EIN KRAFTFAHRZEUG UND ZUGEHÖRIGES VERFAHREN

SYSTEM FOR CONTROLLING A HYBRID PROPULSION UNIT FOR A MOTOR VEHICLE, AND ASSOCIATED METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **20.08.2008 FR 0855640**

(43) Date de publication de la demande:
**11.05.2011 Bulletin 2011/19**

(73) Titulaire: **Renault S.A.S.**
**92100 Boulogne-Billancourt (FR)**

(72) Inventeur: **DAUMARD, Alain**
**F-92200 Bagneux (FR)**

(56) Documents cités:
**EP-A- 1 447 256          WO-A-2008/025147**
**AT-U1- 9 756          FR-A- 2 907 745**
**US-A1- 2007 149 348**

**Description**

La présente invention concerne la gestion de fonctionnement d'un groupe motopropulseur hybride pour véhicule automobile.

Un véhicule automobile à propulsion ou à traction hybride comprend un moteur thermique et un ou plusieurs moteurs électriques alimentés par au moins une batterie embarquée à bord du véhicule.

Des systèmes de commande sont classiquement prévus pour gérer le fonctionnement et la synchronisation des différents moteurs en fonction de conditions de roulage afin de limiter la consommation de carburant et minimiser les émissions de particules polluantes.

En effet, un véhicule hybride peut par exemple fonctionner selon un mode électrique dans lequel l'énergie motrice est fournie uniquement par le ou les moteurs électriques, ou encore selon des modes hybrides dans lesquels l'énergie motrice est fournie par le ou les moteurs électriques et par le moteur thermique qui fonctionnent alors conjointement dans des proportions réglables. On parle d'une pluralité de modes hybrides, car il y a autant de modes hybrides que de rapports de transmission possibles pouvant être engagés sur la boîte de vitesses.

WO 2008/025147 décrit un système de commande d'un groupe motopropulseur hybride comprenant toutes les caractéristiques du préambule de la revendication 1. pour plus de détail, on pourra se référer au document EP-A2-1 493 608 décrivant un système de commande du fonctionnement de moteurs de véhicule automobile hybride traitant notamment de la stratégie de commutation entre les différents modes de fonctionnement du véhicule.

On connaît également, par la demande de brevet US-A1-2005/0274553, un système de commande apte à prendre en compte les conditions de roulage du véhicule et les informations délivrées par des moyens de navigation électroniques pour gérer le fonctionnement et la synchronisation des moteurs.

La demande de brevet US-A1-2007/0017666 décrit un système de commande du fonctionnement de moteurs de véhicule automobile hybride comportant des moyens pour l'optimisation de l'énergie électrique.

Dans ce domaine, on connaît encore, par le document US-B1-7,252,165, un système de commande comprenant des moyens permettant de maintenir l'état de charge de la batterie d'alimentation en énergie électrique à l'intérieur de limites prédéterminées.

La demanderesse a également mis au point un système de commande pour groupe motopropulseur hybride comprenant de tels moyens de maintien de l'état de charge de la batterie d'alimentation du moteur électrique aptes à provoquer l'exécution de cycles de charge et de décharge. Ce système a fait l'objet d'un dépôt de demande de brevet français publiée sous le numéro 2 845 643.

Ce système est avantageux dans la mesure où la gestion de l'état de charge de la batterie permet d'optimiser l'utilisation de l'énergie électrique. Toutefois, ce système a pour inconvénient de piloter les cycles de charge et de décharge uniquement à partir d'un paramètre représentatif de la consommation du moteur électrique.

La présente invention a donc pour but de remédier à cet inconvénient.

Plus particulièrement, la présente invention vise à prévoir un système de commande d'un groupe motopropulseur hybride de véhicule automobile apte à minimiser la consommation de carburant et les émissions polluantes, et à gérer l'état de charge de la batterie d'alimentation électrique en prenant en compte la consommation du ou des moteurs électriques et celle du moteur thermique.

L'invention a pour objet un système de commande d'un groupe motopropulseur hybride pour véhicule automobile du type comprenant un moteur thermique et au moins un moteur électrique alimenté par une batterie. Le système est muni d'un module de détermination d'un mode de fonctionnement optimal du groupe motopropulseur hybride parmi au moins un mode de fonctionnement électrique et un mode de fonctionnement hybride, et d'un module de détermination du point de fonctionnement du ou des moteurs au mode de fonctionnement optimal.

Selon une caractéristique générale, le module de détermination du mode de fonctionnement optimal comprend des moyens de calcul d'un paramètre de consommation globale au moins représentatif de la consommation de carburant du moteur thermique et de la consommation de l'énergie électrique de la batterie par le moteur électrique pour chaque mode de fonctionnement. Dans l'expression de cette consommation globale, la puissance batterie est comptée algébriquement de sorte à être de signe différent en charge et en décharge. Les moyens de calcul comportent également un moyen de pondération apte à affecter la consommation de l'énergie électrique un coefficient. Le coefficient est de valeur positive et variable de façon inversement proportionnelle à l'état de charge de la batterie. Cette pondération et le signe de l'énergie électrique sont choisis de façon à ce que la consommation globale diminue d'autant plus qu'on charge la batterie et inversement quand on la décharge. Enfin, la pondération est variable en fonction de l'état de charge de la batterie de telle sorte à augmenter le poids de l'énergie électrique quand l'état de charge de la batterie est bas et inversement.

La relation entre la pondération associée à la consommation de l'énergie électrique et l'état de charge de la batterie permet de s'assurer que la batterie soit globalement chargée quand l'état de charge est faible et inversement. En effet, quand la batterie est peu chargée, la pondération augmente le poids de l'énergie électrique ce qui en favorise d'autant plus la recharge puisque, dans les conditions précitées, la recharge batterie diminue la consommation globale.

Inversement, si la batterie est très chargée, le poids de l'énergie électrique devient très faible et il devient alors avantageux, pour diminuer la consommation globale, d'utiliser de préférence cette énergie batterie plutôt que le carburant.

Cette relation entre l'état de charge de la batterie et le coefficient de pondération est par ailleurs particulièrement avantageuse dans la mesure où si l'on répète plusieurs fois un même cycle, le système de commande aura tendance à se caler sur une valeur de pondération correspondant à un état de charge constant entre le début et la fin de ce cycle. En effet, en partant d'une valeur d'état de charge de la batterie supérieure à l'état de charge précité, la valeur de la pondération associée sera inférieure et on déchargera la batterie d'alimentation. Ce processus se répètera tant que la pondération sera plus faible que celle correspondant à un état de charge constant. Finalement, l'état de charge de la batterie se stabilisera.

Ce système de commande a également pour effet de charger, respectivement décharger, la batterie d'alimentation du moteur électrique sur des cycles où cela est énergétiquement le plus intéressant, en général des cycles routiers et autoroutiers, respectivement des cycles urbains.

En d'autres termes, la relation entre le coefficient de pondération associé à la consommation de l'énergie électrique et l'état de charge de la batterie permet d'obtenir automatiquement une gestion simple et économique de l'énergie de la batterie sans qu'il soit nécessaire d'avoir recours à d'autres types d'informations.

Bien entendu, on conçoit aisément qu'il est également possible, sans sortir du cadre de la présente invention, de déterminer le coefficient de pondération comme une fonction de l'état de charge de la batterie mais également de l'information routière, du trafic, etc. Par exemple, si le système détermine que le véhicule va bientôt descendre une côte pendant laquelle il pourra être possible de charger la batterie d'alimentation du moteur électrique à moindre coût, le système peut en tenir compte pour provoquer une décharge de la batterie. Dans ces conditions, il est possible d'ajuster la valeur du coefficient de la pondération pour obtenir une décharge de la batterie à une vitesse adaptée aux besoins, à savoir de façon à ce que la batterie soit presque entièrement déchargée au début de la descente.

En effet, la pondération permet de gérer la charge et la décharge de la batterie d'alimentation, ainsi que sa vitesse. Plus la pondération est importante, plus la batterie est chargée rapidement et inversement. Il est donc possible d'adapter la rapidité des cycles de charge et de décharge par un simple algorithme d'ajustement basé sur l'observation de l'état de charge de la batterie.

Dans un mode de réalisation, la pondération est un coefficient affecté à la puissance électrique de la batterie du moteur électrique. Ce coefficient est une fonction décroissante de l'état de charge de la batterie. Avantageusement, la fonction est décroissante linéairement.

De préférence, le module de détermination du mode de fonctionnement optimal comporte un moyen de comparaison des valeurs de consommation globale des différents modes de fonctionnement et de sélection du mode de fonctionnement optimal en fonction des comparaisons effectuées. Le moyen de comparaison et de sélection est avantageusement apte à sélectionner le mode de fonctionnement correspondant au mode dans lequel la consommation globale est la plus réduite.

Selon une autre caractéristique, le module de détermination du mode de fonctionnement optimal comporte, pour chaque mode de fonctionnement, une cartographie dans laquelle sont stockées la consommation de carburant du moteur thermique et la consommation de l'énergie électrique de la batterie par le moteur électrique pour chaque point de fonctionnement dudit mode de fonctionnement.

Dans un mode de réalisation, le système comporte en outre un module d'élimination de modes de fonctionnement non autorisés.

Dans ce cas, le module d'élimination de modes de fonctionnement non autorisés peut comporter des moyens de comparaison d'une variable représentative d'une caractéristique de fonctionnement du ou des moteurs avec une valeur de seuil correspondant à une valeur de seuil admissible pour ladite caractéristique et pour l'un des modes de fonctionnement.

Le système peut également comporter un module de stratégie de commutation apte à autoriser ou non un changement de mode de fonctionnement. Ce module comporte par exemple des moyens de comparaison de la consommation réelle du véhicule et de la consommation du véhicule au mode optimal et des moyens de comparaison de l'écart entre lesdites consommations avec une valeur minimale de seuil à partir de laquelle on autorise un changement de mode.

L'invention concerne également un procédé de commande d'un groupe motopropulseur hybride pour véhicule automobile du type comprenant un moteur thermique et au moins un moteur électrique alimenté par une batterie, le procédé comprenant une étape de détermination d'un mode de fonctionnement optimal du groupe motopropulseur hybride parmi au moins un mode de fonctionnement électrique et un mode de fonctionnement hybride, et une étape de détermination du point de fonctionnement du ou des moteurs au mode de fonctionnement optimal. L'étape de détermination du mode de fonctionnement optimal comprend le calcul d'un paramètre de consommation globale au moins représentatif de la consommation de carburant du moteur thermique et de la consommation de l'énergie électrique de la batterie par le moteur électrique pour chaque mode de fonctionnement. Ledit calcul est adapté pour affecter à la consommation de l'énergie électrique un coefficient variable de façon inversement proportionnelle à l'état de charge de la batterie.

L'invention sera mieux comprise à l'étude d'un mode de réalisation pris à titre d'exemple nullement limitatif et illustré par les dessins annexés, sur lesquels :

- la figure 1 est un schéma synoptique illustrant la structure d'un système de commande d'un groupe motopropulseur hybride pour véhicule automobile selon l'invention,
- la figure 2 est un schéma synoptique illustrant la structure d'un module de détermination d'un mode de fonctionnement optimal du groupe motopropulseur, et
- la figure 3 est un schéma synoptique illustrant un module de détermination du point de fonctionnement du ou des moteurs au mode de fonctionnement optimal.

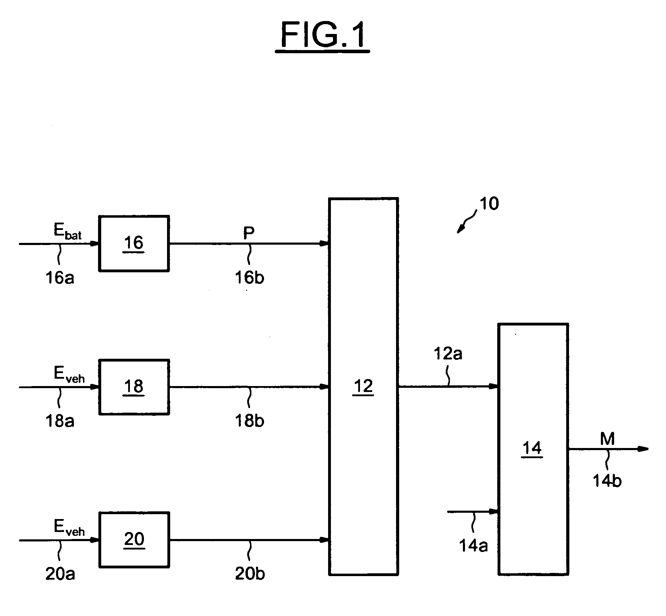

Sur la figure 1, on a représenté schématiquement la structure générale d'un système de commande d'un groupe motopropulseur hybride de véhicule automobile, désigné par la référence numérique générale 10.

Ce système 10 est destiné à sélectionner le mode de propulsion ou traction du véhicule, parmi tous les modes existants, notamment en fonction des conditions de roulage afin de limiter la consommation de carburant et minimiser les émissions de particules polluantes.

Parmi tous les modes existants, il existe ceux pour lesquels l'énergie motrice est fournie par un ou plusieurs moteurs électriques équipant le véhicule et alimentés par une ou des batteries d'alimentation embarquées, et ceux pour lesquels l'énergie motrice est fournie par le ou les moteurs électriques et par le moteur à combustion interne selon des proportions réglables.

Comme illustré à la figure 1, le système 10 comporte principalement un module 12 de détermination du mode de fonctionnement optimal du groupe motopropulseur et un module 14 de stratégie de commutation apte à autoriser ou non le passage du mode de fonctionnement en cours vers le mode de fonctionnement optimal précédemment déterminé.

Le module de détermination 12 du mode de fonctionnement optimal est associé à un module 16 de détermination de l'état de charge de la batterie d'alimentation du ou des moteurs électriques, à un module de lissage 18 destiné à éviter que la vitesse de variation de variables d'état du véhicule dépasse une valeur seuil prédéterminée, et à un module 20 de traitement destiné à déterminer les modes de fonctionnement non admissibles.

Le module 16 de détermination de l'état de charge reçoit en entrée, par l'intermédiaire d'une connexion 16a, un signal $E_{bat}$ de mesure de l'état de charge de la batterie qui est fourni par un moyen de mesure tel qu'un capteur approprié de type classique. Le signal de mesure de l'état de charge de la batterie $E_{bat}$ peut également être calculé en additionnant, respectivement en soustrayant, les ampères entrants, respectivement sortants, de la batterie. Dans ce cas, un capteur de tension et un capteur de courant sont nécessaires.

En sortie, le module 16 de détermination délivre, par l'intermédiaire d'une connexion 16b, un coefficient P représentatif de l'état de charge de la batterie. Ce coefficient P est une fonction décroissante de l'état de charge de la batterie. Par exemple, la fonction est décroissante linéairement et choisie de manière à ce qu'une valeur minimale, respectivement maximale, du paramètre P corresponde à un état de charge égal à 90 %, respectivement 20 %, de l'état de charge maximale de la batterie. Comme cela sera décrit plus en détail par la suite, ce paramètre P sera utilisé comme coefficient de pondération affecté à la consommation de l'énergie électrique lors d'un calcul de la consommation énergétique globale du groupe motopropulseur hybride.

Le module 18 de lissage reçoit en entrée, par l'intermédiaire d'une connexion 18a, un signal $E_{veh}$ correspondant à l'état du véhicule, c'est-à-dire un signal correspondant à des valeurs de couple et de vitesse demandées par le conducteur du véhicule élaborées par exemple à partir d'une position de la pédale d'accélérateur. Ce module 18 de lissage permet d'éviter que la vitesse de variation de variables d'état du véhicule dépasse une valeur de seuil prédéterminée. A cet effet, le module 18 comporte un étage de seuillage effectuant un seuillage de la dérivée du couple par rapport au temps, de manière à éviter que cette dérivée dépasse la valeur de seuil prédéterminée.

Le module de traitement 20 reçoit également en entrée, par l'intermédiaire d'une connexion 20a, le signal $E_{veh}$ pour déterminer les modes de fonctionnement non admissibles du groupe motopropulseur. Ce module 20 comporte essentiellement des moyens de comparaison d'une variable représentative d'une caractéristique de fonctionnement du groupe motopropulseur avec une valeur de seuil correspondant à une valeur de seuil admissible pour cette caractéristique, pour le mode de fonctionnement en cours.

Ainsi par exemple, le module 20 compare la vitesse du véhicule à un seuil prédéterminé et interdit le mode électrique si la vitesse est supérieure à ce seuil. Le module 20 élimine donc les modes de fonctionnement considérés comme non admissibles.

Les variables d'état issues du module 18 de lissage et l'indication des modes de fonctionnement admissibles issus du module 20 de traitement sont présentés, respectivement par des connexions 18b et 20b, au module de détermination 12 du mode de fonctionnement optimal. Le module 12 reçoit également en entrée, par l'intermédiaire de la connexion 16b, le coefficient P en vue de déterminer le mode de fonctionnement optimal du groupe motopropulseur.

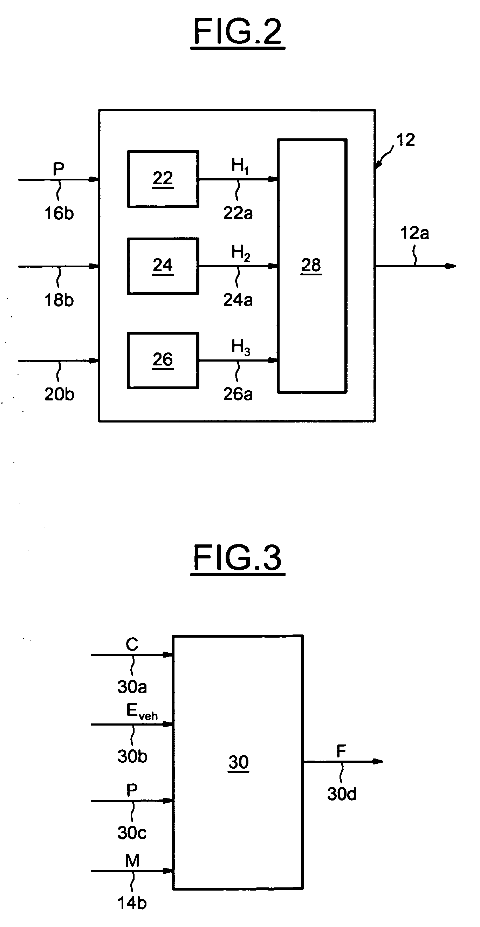

Comme illustré à la figure 2, à partir des informations reçues par le module de détermination 12, des moyens de calcul 22 à 26 dudit module déterminent un paramètre H de consommation globale considéré comme optimal et représentatif de la consommation de carburant du moteur thermique et de la consommation de l'énergie électrique de la batterie par le ou les moteurs électriques pour chacun des modes de fonctionnement admissibles.

A cet égard, les moyens de calcul 22 à 26 utilisent la relation suivante :

$$H = \text{Minimum } (C_{\text{ons carburant}} + P * P_{\text{bat}})$$

dans laquelle :

Cons carburant représente la consommation en carburant du moteur thermique,
P le paramètre issu du module de détermination 16, et
$P_{\text{bat}}$ la puissance électrique de la batterie d'alimentation consommée par le ou les moteurs électriques.

L'expression « Minimum » s'entend comme la recherche du point de fonctionnement du moteur thermique dans son domaine admissible pour ce mode de fonctionnement et pour lequel la fonction $C_{\text{ons}}$ carburant + P * $P_{\text{bat}}$ atteint sa valeur minimale.

Dans l'exemple de réalisation illustré, seuls trois moyens de calcul 22 à 26 ont été représentés pour illustrer le calcul de paramètres $H_1$ à $H_3$ de consommation globale représentative de trois modes de fonctionnement distincts. Bien entendu, on conçoit aisément que le module de détermination 12 comprend un nombre de moyens de calcul égal au nombre de modes distincts de fonctionnement du groupe motopropulseur. En variante, l'ensemble des calculs pourrait être réalisé au sein d'un unique module de calcul.

Afin de déterminer les paramètres de consommation globale, les moyens de calcul 22 à 26 peuvent comprendre chacun, pour le mode de fonctionnement considéré, une cartographie dans laquelle sont stockées la consommation de carburant du moteur thermique et la consommation de l'énergie électrique de la batterie par le ou les moteurs électriques pour chaque point de fonctionnement du mode de fonctionnement considéré.

Ainsi, en fonction des valeurs de couple et de vitesse demandées par le conducteur du véhicule, il est possible de connaître pour chaque mode de fonctionnement la consommation de carburant du moteur thermique et la puissance électrique consommée par le ou les moteurs électriques en tout point de fonctionnement.

Alternativement, il pourrait être envisageable, sans sortir du cadre de la présente invention, de stocker dans le module de détermination 12 des cartographies donnant directement le minimum recherché pour différentes valeurs des entrées 16b, 18b pour les différents modes. Il serait également possible que le module de détermination 12 contienne des modules de calculs procédant à la recherche du minium pour les différents modes.

Les paramètres $H_1$ à $H_3$ de consommation globale sont présentés en entrée, respectivement par l'intermédiaire de connexions 22a à 26a, d'un moyen 28 de comparaison desdites valeurs et de sélection du mode de fonctionnement optimal. A partir des comparaisons effectuées, le moyen 28 sélectionne le mode de fonctionnement correspondant au mode dans lequel le paramètre de consommation globale est le plus faible. Le moyen 28 retient ce mode comme étant le mode de fonctionnement optimal du groupe motopropulseur en fonction de l'état du véhicule demandé par le conducteur.

En se référant de nouveau à la figure 1, l'indication du mode de fonctionnement optimal est présentée au module 14 de stratégie de commutation, par l'intermédiaire d'une connexion 12a. Le module 14 de stratégie reçoit également en entrée, par l'intermédiaire d'une connexion 14a, le signal correspondant au mode de fonctionnement en cours. En sortie, le module 14 délivre, par l'intermédiaire d'une connexion 14b, un signal M de commande de commutation de mode.

Ce module 14 est constitué par un module de filtrage destiné à autoriser ou non un changement de mode de fonctionnement. En effet, un changement de mode de fonctionnement implique d'exercer des actions d'activation ou de coupure sur des organes mécaniques du véhicule, tel que des organes d'embrayage, relativement lourds à mettre en oeuvre.

Ainsi, ce module 14 procède à une comparaison entre la consommation réelle du véhicule en carburant et en énergie électrique et la consommation du véhicule au mode optimal et compare cet écart avec une valeur de seuil à partir de laquelle on autorise un changement de mode de fonctionnement. On autorise ainsi un changement de mode uniquement lorsque le gain en consommation en carburant et en énergie électrique est significatif. On notera que, de préférence, on utilise à cet égard un seuil à hystérésis de manière à éviter des changements de modes trop fréquents.

En se référant maintenant à la figure 3, le système 10 comporte encore un module 30 de détermination des points de fonctionnement des moteurs au mode de fonctionnement optimal précédemment déterminé.

Ce module 30 reçoit en entrée une consigne C de couple à appliquer aux roues, le signal $E_{\text{veh}}$, le paramètre P et le signal M de commande, respectivement par des connexions 30a à 30c et 14b. La consigne C de couple est déterminée de manière connue en soi par exemple à partir de la position de la pédale d'accélérateur.

Ce module 30 incorpore par exemple des cartographies dans lesquelles sont stockés un ensemble de points de fonctionnement optimaux des moteurs en fonction de chaque mode de fonctionnement, du paramètre P, de l'état du véhicule et de la consigne de couple à appliquer aux roues. Par optimaux, on entend les points de fonctionnement pour lesquels la fonction $C_{ons}$ carburant + P * $P_{bat}$ atteint son minimum. Le module 30 délivre directement en sortie, via une connexion 30d, un signal F de commande de fonctionnement du ou des moteurs selon le mode de fonctionnement optimal retenu au préalable.

Dans l'exemple de réalisation qui vient d'être décrit, le paramètre de consommation globale pour chaque mode de fonctionnement est déterminé à partir de la consommation de carburant du moteur thermique et de la consommation de l'énergie électrique stockée dans la batterie par le ou les moteurs électriques. Dans une variante, il est également possible, sans sortir du cadre de la présente invention, de tenir compte pour le calcul des paramètres de consommation globale des émissions polluantes, par exemple de particules d'oxyde d'azote ($NO_x$) et de particules imbrûlées à l'échappement du moteur thermique à partir de la relation suivante :

$$H = C_{ons\ carburant} + P * P_{bat} + KNO_x * E_{missions\ NO} + KPart * E_{missions\ part}$$

dans laquelle :

$C_{ons}$ carburant représente la consommation en carburant du moteur thermique,
P le paramètre issu du module de détermination 16,
$P_{bat}$ la puissance électrique de la batterie d'alimentation consommée par le ou les moteurs électriques,
$E_{missions\ NO}$ la quantité de particules d'oxyde d'azote émises par le moteur, et
$E_{missions\ part}$ la quantité de particules imbrûlées à l'échappement du moteur.

Les coefficients $KNO_x$, KPart fixent respectivement les poids relatifs des émissions de particules d'oxyde d'azote et de particules imbrûlées et peuvent être choisis constants, par exemple à partir des normes anti-pollution en vigueur. En variante, ces coefficients pourraient être choisis variables et dépendants par exemple des montants des émissions de particules passées.

Alternativement, le calcul des paramètres de consommation globale pourrait encore prendre en compte la température du moteur, afin d'adapter la commande en fonction de la mise en température du moteur et d'un dispositif catalytique placé dans la ligne d'échappement, et/ou des puissances à fournir aux auxiliaires électriques et mécaniques tels que les ventilateurs, la climatisation etc ...

## Revendications

1. Système de commande d'un groupe motopropulseur hybride pour véhicule automobile du type comprenant un moteur thermique et au moins un moteur électrique alimenté par une batterie, le système étant muni d'un module (12) de détermination d'un mode de fonctionnement optimal du groupe motopropulseur hybride parmi au moins un mode de fonctionnement électrique et un mode de fonctionnement hybride, et d'un module (30) de détermination du point de fonctionnement du ou des moteurs au mode de fonctionnement optimal, le module (12) de détermination du mode de fonctionnement optimal comprenant des moyens de calcul d'un paramètre (H) de consommation globale au moins représentatif de la consommation de carburant du moteur thermique et de la consommation de l'énergie électrique de la batterie par le moteur électrique pour chaque mode de fonctionnement, **caractérisé en ce que** lesdits moyens de calcul comportent un moyen de pondération apte à affecter à la consommation de l'énergie électrique, un coefficient (P) variable de façon inversement proportionnelle à l'état de charge de la batterie afin d'augmenter la valeur de consommation globale quand la batterie est déchargée et la réduire quand ladite batterie est chargée.

2. Système selon la revendication 1, dans lequel le coefficient (P) est affecté à la puissance électrique de la batterie du moteur électrique.

3. Système selon l'une quelconque des revendications précédentes, dans lequel le module (12) de détermination du mode de fonctionnement optimal comporte un moyen (28) de comparaison des valeurs des paramètres (H) de consommation globale des différents modes de fonctionnement et de sélection du mode de fonctionnement optimal en fonction des comparaisons effectuées.

**4.** Système selon la revendication dans lequel le moyen (28) de comparaison et de sélection est apte à sélectionner le mode de fonctionnement correspondant au mode dans lequel le paramètre de consommation globale a une valeur minimale.

**5.** Système selon l'une quelconque des revendications précédentes, dans lequel le module (12) de détermination du mode de fonctionnement optimal comporte, pour chaque mode de fonctionnement, une cartographie dans laquelle sont stockées la consommation de carburant du moteur thermique et la consommation de l'énergie électrique de la batterie par le moteur électrique pour chaque point de fonctionnement dudit mode de fonctionnement.

**6.** Système selon l'une quelconque des revendications précédentes, comprenant en outre un module d'élimination (20) de modes de fonctionnement non autorisés.

**7.** Système selon l'une quelconque des revendications précédentes, comprenant en outre un module de stratégie de commutation (14) apte à autoriser ou on un changement de mode de fonctionnement.

**8.** Procédé de commande d'un groupe motopropulseur hybride pour véhicule automobile du type comprenant un moteur thermique et au moins un moteur électrique alimenté par une batterie, le procédé comprenant une étape de détermination d'un mode de fonctionnement optimal du groupe motopropulseur hybride parmi au moins un mode de fonctionnement électrique et un mode de fonctionnement hybride, et une étape de détermination du point de fonctionnement du ou des moteurs au mode de fonctionnement optimal, **caractérisé en ce que** l'étape de détermination du mode de fonctionnement optimal comprend le calcul d'un paramètre de consommation globale au moins représentatif de la consommation de carburant du moteur thermique et de la consommation de l'énergie électrique de la batterie par le moteur électrique pour chaque mode de fonctionnement, ledit calcul étant adapté pour affecter à la consommation de l'énergie électrique un coefficient variable de façon inversement proportionnelle à l'état de charge de la batterie afin d'augmenter la valeur de consommation globale quand la batterie est déchargée et la réduire quand ladite batterie est chargée.

## Claims

**1.** System for controlling a hybrid propulsion unit for a motor vehicle of the type comprising a heat engine and at least one electric motor powered by a battery, the system being furnished with a module (12) for determining an optimal operating mode of the hybrid propulsion unit from at least one electric operating mode and one hybrid operating mode, and with a module (30) for determining the operating point of the motor or motors in the optimal operating mode, the module (12) for determining the optimal operating mode comprising means for computing a parameter (H) of overall consumption that is at least representative of the fuel consumption of the heat engine and of the electric power consumption of the battery by the electric motor for each operating mode, **characterized in that** the said computing means comprise a weighting means capable of assigning, to the electric power consumption, a variable coefficient (P) that is inversely proportional to the state of charge of the battery in order to increase the value of overall consumption when the battery is discharged and to reduce it when the said battery is charged.

**2.** System according to Claim 1, in which the coefficient (P) is assigned to the electric power of the battery of the electric motor.

**3.** System according to either one of the preceding claims, in which the module (12) for determining the optimal operating mode comprises a means (28) for comparing values of the parameters (H) of overall consumption of the various operating modes and for selecting the optimal operating mode as a function of the comparisons made.

**4.** System according to Claim 3, in which the comparison and selection means (28) is capable of selecting the operating mode corresponding to the mode in which the overall consumption parameter has a minimal value.

**5.** System according to any of the preceding claims, in which the module (12) for determining the optimal operating mode comprises, for each operating mode, a mapping element in which are stored the fuel consumption of the heat engine and the electric power consumption of the battery by the electric motor for each operating point of the said operating mode.

**6.** System according to any one of the preceding claims, also comprising a module (20) for eliminating unauthorized operating modes.

7. System according to any one of the preceding claims, also comprising a switching-strategy module (14) capable of allowing or disallowing a change of operating mode.

8. Method for controlling a hybrid propulsion unit for a motor vehicle of the type comprising a heat engine and at least one electric motor powered by a battery, the method comprising a step of determining an optimal operating mode of the hybrid propulsion unit from at least one electric operating mode and one hybrid operating mode, and a step of determining the operating point of the motor or motors in the optimal operating mode, **characterized in that** the step of determining the optimal operating mode comprises the computation of an overall consumption parameter at least representative of the fuel consumption of the heat engine and of the electric power consumption of the battery by the electric motor for each operating mode, the said computation being suitable for assigning to the electric power consumption a variable coefficient in a manner inversely proportional to the state of charge of the battery in order to increase the value of overall consumption when the battery is discharged and to reduce it when the said battery is charged.

**Patentansprüche**

1. System zur Steuerung einer Hybridantriebseinheit für ein Kraftfahrzeug von der Art, die einen Verbrennungsmotor und mindestens einen von einer Batterie gespeisten Elektromotor enthält, wobei das System mit einem Modul (12) zur Bestimmung einer optimalen Betriebsart der Hybridantriebseinheit unter mindestens einer Elektro-Betriebsart und einer Hybrid-Betriebsart und mit einem Modul (30) zur Bestimmung des Arbeitspunkts des oder der Motoren in der optimalen Betriebsart versehen ist, wobei das Modul (12) zur Bestimmung der optimalen Betriebsart Einrichtungen zur Berechnung eines Parameters (H) des globalen Verbrauchs enthält, der mindestens für den Kraftstoffverbrauch des Verbrennungsmotors und den Verbrauch elektrischer Energie der Batterie durch den Elektromotor für jede Betriebsart repräsentativ ist, **dadurch gekennzeichnet, dass** die Berechnungseinrichtungen eine Gewichtungseinrichtung aufweisen, die dem Verbrauch der elektrischen Energie einen Koeffizienten (P) zuweisen können, der umgekehrt proportional zum Ladezustand der Batterie variabel ist, um den Wert des globalen Verbrauchs zu erhöhen, wenn die Batterie entladen ist, und ihn zu verringern, wenn die Batterie geladen ist.

2. System nach Anspruch 1, bei dem der Koeffizient (P) der elektrischen Leistung der Batterie des Elektromotors zugeordnet ist.

3. System nach einem der vorhergehenden Ansprüche, bei dem das Modul (12) zur Bestimmung der optimalen Betriebsart eine Einrichtung (28) zum Vergleich der Werte der Parameter (H) des globalen Verbrauchs der verschiedenen Betriebsarten und zur Auswahl der optimalen Betriebsart abhängig von den durchgeführten Vergleichen aufweist.

4. System nach Anspruch 3, bei dem die Vergleichs- und Auswahleinrichtung (28) die Betriebsart auswählen kann, die der Art entspricht, bei der der Parameter des globalen Verbrauchs einen minimalen Wert hat.

5. System nach einem der vorhergehenden Ansprüche, bei dem das Modul (12) zur Bestimmung der optimalen Betriebsart für jede Betriebsart ein Kennfeld aufweist, in dem der Kraftstoffverbrauch des Verbrennungsmotors und der Verbrauch der elektrischen Energie der Batterie durch den Elektromotor für jeden Arbeitspunkt der Betriebsart gespeichert sind.

6. System nach einem der vorhergehenden Ansprüche, das weiter ein Modul (20) zum Entfernen nicht genehmigter Betriebsarten enthält.

7. System nach einem der vorhergehenden Ansprüche, das weiter ein Schaltstrategiemodul (14) enthält, das eine Änderung der Betriebsart genehmigen kann oder nicht.

8. Verfahren zur Steuerung einer Hybridantriebseinheit für ein Kraftfahrzeug von der Art, die einen Verbrennungsmotor und mindestens einen von einer Batterie gespeisten Elektromotor enthält, wobei das Verfahren einen Schritt der Bestimmung einer optimalen Betriebsart der Hybridantriebseinheit unter mindestens einer Elektro-Betriebsart und einer Hybrid-Betriebsart und einen Schritt der Bestimmung des Arbeitspunkts des oder der Motoren in der optimalen Betriebsart enthält, **dadurch gekennzeichnet, dass** der Schritt der Bestimmung der optimalen Betriebsart die Berechnung eines Parameters des globalen Verbrauchs enthält, der mindestens für den Kraftstoffverbrauch des Verbrennungsmotors und für den Verbrauch elektrischer Energie der Batterie durch den Elektromotor für jede Betriebsart repräsentativ ist, wobei die Berechnung geeignet ist, um dem Verbrauch der elektrischen Energie einen Koeffizienten zuzuordnen, der umgekehrt proportional zum Ladezustand der Batterie variabel ist, um den Wert des globalen Verbrauchs zu erhöhen, wenn die Batterie entladen ist, und ihn zu verringern, wenn die Batterie geladen ist.

# FIG.1

## FIG.2

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008025147 A
- EP 1493608 A2
- US 20050274553 A1
- US 20070017666 A1
- US 7252165 B1
- FR 2845643